# EUROPÄISCHE PATENTSCHRIFT

(11) **EP 3 385 339 B1**
(45) Veröffentlichungstag und Bekanntmachung des Hinweises auf die Patenterteilung: **06.05.2020**
(21) Anmeldenummer: 17165280.3
(22) Anmeldetag: 06.04.2017
(51) Int. Cl.: C09D 5/00

(54) **WÄSSRIGE BESCHICHTUNGSSTOFFE**
AQUEOUS COATING SUBSTANCES
MATÉRIAU DE REVÊTEMENT AQUEUX

(43) Veröffentlichungstag der Anmeldung: 10.10.2018
(73) Patentinhaber: DAW SE, 64372 Ober-Ramstadt (DE)
(72) Erfinder: Grosskopf, Jan, 64367 Mühltal (DE); Seeger, Alexander, 64739 Höchst (DE); Westmeier, Johannes, 35112 Fronhausen (DE); Brenner, Thomas, 64367 Mühltal (DE)
(74) Vertreter: Metten, Karl-Heinz

(56) Entgegenhaltungen:
- WO-A1-2015/193192
- DE-A1- 19 515 539
- DE-A1-102007 034 865
- DE-A1-102013 020 575
- DE-A1-102014 013 455
- DE-C1- 4 309 625

## Beschreibung

Die vorliegende Erfindung betrifft wässrige Beschichtungsstoffe, insbesondere Dispersionsbeschichtungsstoffe. Ferner betrifft die Erfindung einen Farb- oder Grundierungsanstrich auf einer Substratoberfläche, erhalten oder erhältlich durch ein- oder mehrmaliges Auftragen des erfindungsgemäßen Beschichtungsstoffs auf der Substratoberfläche, sowie die Verwendung des erfindungsgemäßen Beschichtungsstoffs als Farbe oder Grundierung für den Innenraumbereich.

Anstrichfarben unterliegen einer fortwährenden Weiterentwicklung. Dies ist Kundenwünschen ebenso geschuldet wie dem Anspruch, dem Verbraucher möglichst kostengünstig qualitativ hochwertige Produkte zur Verfügung stellen zu können. Für Farbanstriche kann auf unterschiedlichste Beschichtungssysteme zurückgegriffen werden. Exemplarisch seien Silikatfarben, Dispersionssilikatfarben und Kunststoffdispersionsfarben genannt. Für diese Systeme finden sich in der DIN 18363:2016-09 entsprechende Definitionen.

Von Farbanstrichen wird häufig nicht nur verlangt, dass sie ein hohes Deckvermögen besitzen, sondern ebenfalls, dass sie über eine hohe mechanische Beständigkeit, beispielsweise gute Nassabriebbeständigkeit, verfügen. Entsprechend hat es nicht an Versuchen gefehlt, zu entsprechend verbesserten Farbanstrichen zu gelangen.

Beispielsweise hatte sich schon die DE 10 2013 020 575 A1 die Aufgabe gestellt, Dispersionsfarben bereitzustellen, die bei einem reduzierten Gehalt an Titandioxid gleichwohl ein hohes Deckvermögen sowie eine gute Nassabriebbeständigkeit gewährleisten. Dies soll durch ein solches Beschichtungsmittel gelingen, enthaltend bezogen auf die Gesamtmenge des Beschichtungsmittels, 0,5 bis 30 Gew.-% Hohlteilchen, umfassend eine einen Hohlraum bildende äußere Schale und ein von der äußeren Schale zumindest teilweise umschlossenes. inneres Material, wobei die äußere Schale einen Brechungsindex von 1,3 bis 2,5 und das innere Material einen Brechungsindex von 1,4 bis 3,2 aufzuweisen haben, und wobei das innere Material das Volumen des Hohlraums teilweise ausfüllt, 0,5 bis 40 Gew.-% mindestens eines filmbildenden Polymers sowie Wasser und/oder Lösemittel.

Hinreichend in Bezug auf Deckvermögen und Nassabrieb sollen gemäß der DE 10 2014 013 455 A1 solche Dispersionsfarben sein, die 2 bis 30% Polymerdispersion gerechnet als Feststoffanteil, 10 bis 60% Pigment und/oder Füllstoff, 0,5 bis 5% Siliconat als Additiv und zu 100% ergänzte Anteile an Wasser enthalten.

Gemäß der WO 2015/193192 A1 sollen solche wässrigen Polymerisatdispersionen eine verbesserte Nassscheuerbeständigkeit aufweisen, die durch radikalische wässrige Emulsionspolymerisation einer Monomermischung erhältlich sind, enthaltend 30 bis 70 Gew.-Teile wenigstens eines Monomers, dessen Homopolymerisat eine Glasübergangstemperatur Tg < 25°C aufweist, 30 bis 70 Gew.-Teile wenigstens eines Monomers, dessen Homopolymerisat eine Glasübergangstemperatur Tg > 25°C aufweist, sowie c) 0,1 bis 5 Gew.-Teile wenigstens einer Verbindung enthaltend stabilisierende Gruppen und 0,05 bis 5 Gew.-Teile wenigstens eines copolymerisierbaren Monomers enthaltend eines oder mehrerer hydrolysierbare Silan-Monomere.

Die DE 10 2007 034 865 A1 zeigt eine Beschichtungsstoffzusammensetzung, die im Wesentlichen 0,1 bis 80 Gew.-% eines vergilbungsbeständigen, niedrigviskosen, ungesättigten, amorphen Polyesters enthält, der weitestgehend frei von Benzol und Formaldehyd ist, 99,9 bis 20 Gew.-% mindestens eines weiteren Bindemittels, 0 bis 80 Gew.-% mindestens eines Hilfsstoffes und/oder Zusatzstoffes sowie 0 bis 70 Gew.-% mindestens eines Farbmittels und/oder Füllstoffs, wobei die Summer der Gewichtsangaben der Komponenten 100 Gew.-% beträgt.

Die DE 195 15 539 A1 offenbart eine wässrige Beschichtungszusammensetzung, die wässrige Bindemittel enthaltend Organopolysiloxanharze, Monoorganosilanoate und/oder dessen durch Wasserabspaltung entstehende Kondensationsprodukte, wässrige Lösungen kolloider Kieselsäuren sowie Wasser, Metallpulver und/oder anorganische Pigmente, gegebenenfalls Siliciumdioxide mit einer BET-Oberfläche von mindestens 50 m²/g, die gegebenenfalls hydrophobiert sind, und gegebenenfalls Wasser enthält.

Die DE 43 09 625 C1 zeigt ein Verfahren zur Herstellung eines kunstharzdispersionsvergüteten silikatgebundenen Beschichtungssystems in Form von Anstrichen, Spachtelmassen, Grundierungen, Wandbelägen und Putzen, wobei die Mischung aus Kaliwasserglas und Acrylatmischpolymerisat auf Kunstharzdispersionsbasis vorübergehend unter Rühren auf ca. 50°C erwärmt wird.

Es wäre nur wünschenswert, auf solche wässrigen Beschichtungsmassen zurückgreifen zu können, die sich kostengünstig herstellen lassen und die sich gleichzeitig hinsichtlich Farbeindruck und der mechanischer Beständigkeit durch ein nutzerfreundliches Eigenschaftsprofil auszeichnen. Demgemäß lag der vorliegenden Erfindung die Aufgabe zu Grunde, wässrige Beschichtungsmassen zur Verfügung zu stellen, die nicht mehr mit den Nachteilen des Stands der Technik behaftet sind und die insbesondere über ein gutes Deckvermögen und/oder einen guten, dauerhaften Farbeindruck, ermittelt insbesondere anhand der Weiß- und/oder Gelbindex-Werte, und gegebenenfalls zusätzlich auch über eine zufriedenstellende Nassabriebsbeständigkeit verfügen.

Demgemäß wurden wässrige Beschichtungsstoffe, insbesondere Dispersionsbeschichtungsstoffe, gefunden, enthaltend a) organische Bindemittel in einer Menge im Bereich von 4,0 bis 30,0 Gew.-% (Feststoffanteil), b) Wasserglas und/oder Kieselsol in einer Menge im Bereich kleiner 0,1 bis kleiner 1,5 Gew.-%

(Feststoffanteil) und c) 15 bis 70 Gew.-% an mindestens einem Pigment und/oder mindestens einem Füllstoff und e) mindestens ein Rheologieadditiv, insbesondere Verdicker, wobei das organische Bindemittel a) in den Beschichtungsstoffen in Form einer wässrigen Dispersion auf Basis von Vinylacetat/Ethylen-Copolymeren, Copolymeren auf Basis von Vinylaromaten und Acrylaten und/oder Copolymeren auf Basis von Reinacrylaten vorliegt und wobei das organische Bindemittel a) und Wasserglas und/oder Kieselsol in Form eines hybriden Bindemittels vorliegen und wobei diese einen pH-Wert im Bereich von 8,5 bis 12 aufweisen oder auf einen pH-Wert im Bereich von 8,5 bis 12 eingestellt sind.

Beschichtungsstoffe im Sinne der vorliegenden Erfindung sollen Zusammensetzungen gemäß DIN EN ISO 4618:2015-01 umfassen. Hierunter fallen insbesondere Anstrichstoffe wie Dispersionsfarben und Spachtelmassen.

In den erfindungsgemäßen Beschichtungsstoffen liegt in einer zweckmäßigen Ausgestaltung das organische Bindemittel a) in einer Menge im Bereich von 4,0 bis 12,5 Gew.-%, bevorzugt im Bereich von 4,5 bis 10,0 Gew.-% und besonderes bevorzugt im Bereich von 5,0 bis 9,0 Gew.-%. Mit den genannten Bindemittelanteilen lässt sich mit den erfindungsgemäßen Beschichtungsstoffen im Allgemeinen ein für Innen- wie auch Außenanwendung ausreichender geringer Nassabrieb erhalten. Ferner liegt alternativ oder zusätzlich in einer weiteren zweckmäßigen Ausgestaltung das Wasserglas und/oder Kieselsol in einer Menge im Bereich von 0,1 bis 1,45 Gew.-% und bevorzugt im Bereich von 0,25 bis 1,40 Gew.-%. Für viele Anwendungen hat sich gezeigt, dass sich mit einer Menge kleiner 1,5 Gew.-% (Feststoffanteil) an Wasserglas mit den erfindungsgemäßen Beschichtungsmassen ein hinreichendes Deckvermögen erhalten lässt. Wasserglas kann z.B. durch Reaktion von Alkalicarbonat und/oder Alkalihydroxyd mit Quarzsand erhalten werden. Es liegt üblicherweise in Form wässriger Lösungen vor. Diese können über unterschiedliche Konzentrationen verfügen. Technische Bedeutung haben im Allgemeinen Natrium- und Kaliumwasserglas sowie Lithiumwasserglas. Für die erfindungsgemäßen Beschichtungsmassen greift man bevorzugt auf Kaliumwasserglas zurück.

Das organisches Bindemittel a) liegt in den erfindungsgemäßen Beschichtungsstoffen in Form einer wässrigen Dispersion auf Basis von Vinylacetat/Ethylen-Copolymeren, Copolymeren auf Basis von Vinylaromaten, insbesondere Styrol, und Acrylaten und/oder Copolymeren auf Basis von Reinacrylaten, insbesondere auf Basis von Styrolacrylatcopolymeren, vor. Demgemäß kommen als organische Bindemittel für die erfindungsgemäßen wässrigen Beschichtungsmassen Vinylacetat/Ethylen-Copolymere, Copolymere auf Basis von Vinylaromaten, insbesondere Styrol, und Acrylaten oder auf Basis von Reinacrylaten, insbesondere auf der Basis von Reinacrylaten in Betracht. Reinacrylate umfassen Homo- und insbesondere Copolymere von (Meth)acrylaten, d.h. Acrylaten und/oder Methacrylaten, gegebenenfalls auch mit (Meth)acrylsäure, d.h. Acryl- und/oder Methacrylsäure, als Comonomerbaustein. Das organische Bindemittel wird in einer zweckmäßigen Ausgestaltung in Form einer wässrigen Bindemitteldispersion eingesetzt. Demgemäß kommen als organische Bindemittel insbesondere auch solche in Frage, bei denen - die in Wasser dispergierten oder dispergierbaren Polymere aus gleichen oder verschiedenen Monomeren gebildet sind, wobei mindestens eines der Monomere Acrylsäureester, Methacrylsäurester, Acrylsäure, Methacrylsäure, Vinylacetat, Vinylchlorid, Versatat, Acrylitril oder eine vinylaromatische Verbindung darstellt. In einer zweckmäßigen Ausgestaltung basiert das in Wasser dispergierte oder dispergierbare Polymer dabei auf i) Acrylsäureestern und Vinylaromaten, insbesondere Styrol, oder auf ii) Acrylsäureestern und Vinylestem mindestens einer Koch-Säure, insbesondere der Versatinsäure, oder Vinylaromaten, insbesondere Styrol.

Unter den Begriff der organischen Bindemittel fallen im Sinne der Erfindung auch Dispersionen auf Basis der zuvor genannten Polymere und Copolymere, jedoch enthaltend darin einpolymerisiert a) mindestens ein Monomer mit mindestens einem hydrolysierbaren Silan als funktioneller Gruppe, wobei diese funktionelle Gruppe nicht kettenverlängernd an der Polymerisationsreaktion teilnimmt, und/oder b) mindestens ein Monomer mit mindestens einer Hydroxygruppe als funktioneller Gruppe, wobei diese funktionelle Gruppe nicht kettenverlängernd an der Polymerisationsreaktion teilnimmt. Ferner umfassen organische Bindemittel insbesondere auch hybride Bindemittel. Unter hybride Bindemittel im Sinne der vorliegenden Erfindung fallen auch Reaktionsprodukte gebildet aus mindestens einem organischen Bindemittel ausgewählt aus der Gruppe der vorangehend genannten organischen Bindemittel, enthaltend in die Polymere und Copolymere einpolymerisiert a) mindestens ein Monomer mit mindestens einem hydrolysierbaren Silan als funktioneller Gruppe, wobei diese funktionelle Gruppe nicht kettenverlängernd an der Polymerisationsreaktion teilnimmt, und/oder b) mindestens ein Monomer mit mindestens einer Hydroxygruppe als funktioneller Gruppe, wobei diese funktionelle Gruppe nicht kettenverlängernd an der Polymerisationsreaktion teilnimmt, und Kieselsol und/oder Wasserglas, insbesondere Wasserglas. Ohne an eine Theorie gebunden zu sein, wird vermutet, dass die hydrolysierbare Silangruppe a) und/oder die Hydroxygruppe b) eine Kondensationsreaktion mit den funktionellen Gruppen des Kieselsols und/oder Wasserglases eingehen.

Exemplarisch seien als geeignete Pigmente anorganische Pigmente wie Bunt-, Schwarz- und Weißpigmente (Farbpigmente) sowie Glanzpigmente und organische Pigmente wie Bunt- und Schwarzpigmente genannt. Als geeignete anorganische Weißpigmente kommen zum Beispiel Titandioxid, Zinkweiß, Farbenzinkoxid; Zinksulfid und/oder Lithopone und/oder Ettringit in Betracht. Unter den anorganischen Schwarzpigmenten kann zum Beispiel ausgewählt werden unter Eisenoxidschwarz, Eisen-Mangan-Schwarz, Spinellschwarz und/oder Ruß. Als geeignete anorganische Buntpigmente kann zum Beispiel zurückgegriffen werden auf Chromoxid, Chromoxidhydratgrün, Chromgrün, Cobaltgrün, Ultramaringrün, Kobaltblau, Ultramarinblau, Manganblau, Ultramarinviolett, Kobalt- und Manganviolett, Eisenoxidrot, Cersulfid, Molybdatrot, Ultramarinrot, Eisenoxidbraun, Mischbraun, Spinell- und Korundphasen, Chromtitangelb, Zinnzinktintant, Chromorange, Cersulfid, Eisenoxidgelb, Nickeltitangelb, Chromtitangelb, Spinellphasen, Chromgelb und/oder Bismutvanadat.

Geeignete organische Pigmente können hierbei . z.B. ausgewählt werden aus der Gruppe - bestehend aus Monoazopigmenten, Diazopigmenten, Diazokondensationspigmenten, Anthrachinonpigmenten, Anthrapyrimidinpigmenten, Chinacridonpigmenten, Diketopyrrolopyrrolpigmenten, Dioxazinpigmenten, Flavanthronpigmenten, Indanthronpigmenten, Isoindolinpigmenten, Isoindolinonpigmenten, Isoviolanthronpigmenten, Metallkomplexpigmenten, Perinonpigmenten, Perylenpigmenten, Phtalocyaninpigmenten, Pyranthronpigmenten, Pyrazolochinazolonpigmenten, Thioindigopigmenten, Triarylcarboniumpigmenten und deren beliebigen Mischungen. Exemplarisch seien als geeignete organische Pigmente Bunt- und Schwarzpigmente genannt. Als geeignete organischen Buntpigmente kann zum Beispiel zurückgegriffen werden auf C.I. Pigment Blue 15, C I. Pigment Blue 15:1, C.I. Pigment Blue,15:2, C.I. Pigment Blue 15:3, C.I. Pigment Blue 15:4, C.I. Pigment Blue 15:6, C.I Pigment Blue 16, C.I. Pigment Green 7, C.I. Pigment Green 36, C.I. Pigment Orange 36, C.I. Pigment Orange 43, C.I Pigment Orange 73, C.I. Pigment Red 122, C.I: Pigment Red 168, C.I. Pigment Red 179, C.I. Pigment Red 188, C.I. Pigment Red 254, C.I. Pigment Red 264, C.I. Pigment Red 282, C.I. Pigment Violett 19, C.I.Pigment Violett 23, Pigment Yellow 74, Pigment Yellow 83, Pigment Yellow 97, C.I. Pigment Yellow 110, C.I. Pigment Yellow 138, C.I. Pigment Yellow 154 oder beliebige Mischungen dieser Pigmente. Geeignete Pigmentmischungen können sowohl Mischungen aus anorganischen und organischen Pigmenten, als auch Mischungen aus unterschiedlichen anorganischen Pigmenten sowie Mischungen aus unterschiedlichen organischen Pigmenten umfassen.

Besonders geeignete Pigmente umfassen zum Beispiel Titandioxid, Zinksulfid, Zinkoxid, Baryt, Ruß, Eisenoxid, Chromoxid, Kobaltblau, Phtalocyaninpigment, Spinellpigment, Nickeltitanat, Chromtitanat und deren beliebige Mischungen.

Grundsätzlich können geeignete Füllstoffe ausgewählt werden aus der Gruppe bestehend aus Silikaten, Karbonaten, Flußspat, Sulfaten, Oxiden und deren beliebige Mischungen. Exemplarisch seien calcitische Füllstoffe, insbesondere Calciumcarbonate, Dolomite, Calcite und/oder Aragonite, silikatische Füllstoffe, insbesondere Quarzite, Schichtsilikate, Feldspate, Vulkanite und/oder Kieselerden wie Kieselgur und Diatomeenerden, sulfatische Füllstoffen, insbesondere Bariumsulfat, und chemisch modifizierte Füllstoffe genannt.

Das mindestens eine Pigment und/oder der mindestens eine Füllstoff c) liegen in den erfindungsgemäßen Beschichtungsstoffen in einer zweckmäßigen Ausgestaltung in einer Menge im Bereich von 20 bis 70 Gew.-%, vorzugsweise im Bereich von 25 bis 70 Gew.-% und besonders bevorzugt im Bereich von 35 bis 60 Gew.-%, vor.

Die erfindungsgemäßen Beschichtungsstoffe weisen in einer bevorzugten Ausgestaltung einen pH-Wert im Bereich von 9 bis 12, vorzugsweise im Bereich von 9 bis 11,5 auf oder werden auf einen pH-Wert im Bereich von 9 bis 12, vorzugsweise im Bereich von 9 bis 11,5, eingestellt. Die Einstellung des pH-Wertes kann durch das zugesetzte Wasserglas und/oder Kieselsol erfolgen. Gegebenenfalls können auch Alkali- und/oder Erdalkalihydroxide, z.B. KOH, Ammoniak und/oder Aminverbindungen, vorzugsweise in Form wässriger Lösungen, zugegeben werden. Demgemäß können die erfindungsgemäßen Beschichtungsstoffe ferner mindestens ein Alkali- und/oder Erdalkalihydroxid, Ammoniak und/oder eine Aminverbindung (Komponente d)) aufweisen. Geeignete Aminverbindungen umfassen z.B. auch Aminoalkohole. Überraschend wurde gefunden, dass diese Aminoalkohole in den erfindungsgemäßen wässrigen Beschichtungsmassen auch eine stabilisierende Wirkung ausüben können. Sie können in den erfindungsgemäßen Beschichtungsstoffen darüber hinaus beispielsweise auch als Neutralisationsmittel und/oder als Dispergiermittel eingesetzt werden. Exemplarisch seien als bevorzugte Aminoalkohole 2-Amino-2-methyl-1-propanol, 2-Amino-2-ethyl-1,3-propandiol, N,N,N',N'-Tetrakis(2-hydroxypropyl)-ethylendiamin und deren Mischungen sowie Polyhydroxyamine, insbesondere Polyhydroxyamine, bei denen die Polyhydroxy-Einheit auf einer Hexose, vorzugsweise Glukose, basiert, genannt. Besonders geeignete Polyhydroxyamine umfassen Alkylglukamine, insbesondere tertiäre Alkylglukamine wie Dimethylglukamin, Hydroxyethyl- und Hydroxypropyl-N-Methylglukamin sowie deren Mischungen. Selbstverständlich können auch beliebige Mischungen an Polyhydroxyaminen, insbesondere den bevorzugten Polyhydroxyaminen, und 2-Amino-2-methyl-1-propanol, 2-Amino-2-ethyl-1,3-propandiol und/oder N,N,N',N'-Tetrakis(2-hydroxypropyl)-ethylendiamin eingesetzt werden. Unter den Aminoalkoholen wird bevorzugt auf 2-Amino-2-methyl-l-propanol, 2-Amino-2-ethyl-1,3-propandiol und/oder N,N,N',N'-Tetrakis(2-hydroxypropyl)-ethylendiamin zurückgegriffen.

Die erfindungsgemäßen Beschichtungsstoffe können ferner ausgestattet sein mit f) mindestens einem Alkylalkoxysilan, Alkylalkoxysiloxan, wasserlöslichen Alkylsilikonat, insbesondere Kaliummethylsilikonat, Monoalkylsilantriol, Dialkylsilandiol, Trialkylsilanol, Alkalisalz von Monoalkylsilantriol, insbesondere Kaliummethylsilantriolat und/oder Kaliumethylsilantriolat, Dialkylsilandiol oder Trialkylsilanol oder beliebigen Mischungen hiervon sowie gegebenenfalls g) mindestens einem Chelatbildner (auch Komplexbildner genannt) und/oder g) gegebenenfalls mit mindestens einem Additiv. Als geeignete Komplexbildner bzw. Chelatbildner seien genannt Ethylendiamintetraessigsäure (EDTA), Diethylentriaminpentaessigsäure (DTPA), Nitrilotriessigsäure Hydroxyethylethylendiamintriessigsäure, Aminopolycarbonsäuren, insbesondere enthaltend eine oder mehrere Aminogruppen und zwei oder mehr Carbonsäuregruppen, und Polyphosphonsäuren, z.B. Phosphonopolycarbonsäuren wie 2-Phosphonobutan-1,2,4-tricarbonsäure, sowie deren beliebige Mischungen.

Als Additive können grundsätzlich herkömmliche Additive, wie sie für wässrige Beschichtungsmasse zum Einsatz kommen, eingesetzt werden. Exemplarisch können geeignete Additive ausgewählt sein aus der Gruppe bestehend aus mindestens einem Netz- und/oder Dispergiermittel, Entschäumern, Stabilisatoren, Flammschutzmitteln, Hydrophobierungsmitteln, Mattierungsmitteln, insbesondere Fällungskieselsäure, Schichtsilikaten, organisch modifizierten Schichtsilikaten und/oder thixotropen Alkydharzen, Oberflächenadditiven, insbesondere Silikonoberflächenadditiven, beispielsweise polyethermodifiziertes Polymethylalkylsiloxan und/oder Silikonpolyether-Copolymere, Puffersubstanzen, UV-Absorbern, Radikalfängern und Mischungen dieser Verbindungen. Die erfindungsgemäßen wässrigen Beschichtungsstoffe enthalten als Additive vorzugsweise mindestens einen Verdicker und/oder einen Entschäumer. Besonders bevorzugt liegen in den erfindungsgemäßen wässrigen Beschichtungsstoffen sowohl Verdicker wie auch Entschäumer vor.

Die genannten Additive liegen in einer bevorzugten Ausgestaltung in den erfindungsgemäßen wässrigen Beschichtungsstoffen in einer Menge im Bereich von 0,001 bis 5 Gew.-%, vorzugsweise im Bereich von 0,01 bis 4 Gew.-% und besonders bevorzugt im Bereich von 0,1 bis 3,5 Gew.-% vor, jeweils bezogen auf den Feststoffanteil bzw., sofern diese Additive bei Raumtemperatur nicht als Feststoff vorliegen sollten, auf den nicht-wässrigen Wirkstoffanteil dieser Additivkomponenten.

Geeignete Verdicker können ausgewählt werden aus der Gruppe bestehend aus Polyacrylat-Verdickern, Polyurethan-Verdickem, Polyhamstoff-Verdickern; Cellulose-Verdickern, hierbei insbesondere Hydroxyethylcellulose und/oder Methylcellulose, Polyvinylalkohol-Verdickern, Polyetherpolyol-Verdickern, Polysaccharid-Verdickem, hierbei insbesondere Xanthan und/oder Agar Agar, und beliebigen Mischungen hiervon.

Geeignete Verdickersysteme können auch auf der kombinierten Verwendung von Schichtsilikaten, insbesondere organisch modifizierten Schichtsilikaten, und Polysacharidverdickern, hierbei insbesondere Xanthan, basieren.

In einer weiteren bevorzugten Ausführungsform können die erfindungsgemäßen Beschichtungsstoffe i) 4 bis 12,5 Gew.-%, insbesondere 4 bis 7 Gew.-%, Polymerdispersion (Komponente a)), ii) 0 bis 30 Gew.-%, insbesondere 2,0 bis 15 Gew.-%, Pigmente (Komponente c)), iii) 15 -bis 70 Gew.-%, insbesondere 20 bis 65 Gew.-%, Füllstoffe (Komponente c)) und/oder, vorzugsweise und, iv) 0,1 bis 1,5 Gew.-%, insbesondere 0,2 bis 1,25 Gew.-%, Wasserglas (Komponente b)) sowie v) zu 100 Gew.-% ergänzte Anteile an Wasser enthalten.

Die erfindungsgemäßen wässrigen Beschichtungsstoffe zeichnen sich insbesondere auch dadurch aus, dass sie im Wesentlichen frei von Konservierungsmitteln sein können. Hierbei ist von besonderem Vorteil, dass diese Beschichtungsstoffe auch ohne jegliche organische biozide Konservierungsmittel über längeren Zeitraum keinen Pilz- und/oder bakteriellen Befall zeigen. Es ist mit den erfindungsgemäßen Beschichtungsstoffen demgemäß nicht mehr zwingend erforderlich, auf Topf- und/oder Filmkonservierungsmittel zurückgreifen zu müssen. Mit den erfmdungsgemäßen wässrigen Beschichtungsstoffen geht der weitere Vorteil einher, dass durch, insbesondere festkörpergleiche, Substitution von Pigmenten, insbesondere Weißpigmenten wie Titandioxid, gegen Wasserglas und/oder Kieselsol, insbesondere Wasserglas, in vielen Fällen das Deckvermögen, gemessen nach DIN EN ISO 6504-3 in Verbindung mit DIN EN 13300 (November 2002), nicht beeinträchtigt wird.

Die erfindungsgemäßen Beschichtungsmasse eignen sich zum Beispiel als Grundierung sowie als Fassaden- oder Innenraumfarbe.

Die der Erfindung zu Grunde liegende Aufgabe wird des Weiteren gelöst durch einen Farb- oder Grundierungsanstrich auf einer Substratoberfläche, erhalten oder erhältlich durch ein- oder mehrmaliges Auftragen des erfindungsgemäßen Beschichtungsstoffs auf der Substratoberfläche. Demgemäß sind die erfindungsgemäßen Beschichtungsstoffe, insbesondere in Form von Dispersionsbeschichtungsstoffen, als Farbe oder Grundierung für den Innenraumbereich geeignet.

Mit den erfindungsgemäßen wässrigen Beschichtungsstoffen gelingt ein relativ kostengünstiger Zugang zu Grundierungs- bzw. Farbanstrichen, die sich durch ein hohes Deckvermögen und eine gute Nassabriebbeständigkeit auszeichnen. Die mit den erfindungsgemäßen Beschichtungsstoffen erhaltenen Beschichtungen sind zudem regelmäßig mit einem verbesserten Weißindex und auch einem geringen Gelbindex ausgestattet.

Die beiden Messgrößen Weißindex und Gelbindex wurden gemäß ASTM E 313:2015 bestimmt. Für die Ermittlung des Nassabriebs wurde auf die Norm EN 13300 (November 2002) zurückgegriffen. Die Ermittlung des Deckvermögens erfolgte nach DIN EN ISO 6504-3 :2007-05.

Die Erfindung wird durch die nachfolgenden, beispielhaften Zusammensetzungen beschrieben, die jedoch keine Limitierung der Erfindung darstellen. Der Fachmann auf dem Gebiet kann, basierend auf der vorliegenden Beschreibung sowie seinem allgemeinen Fachwissen, weitere Ausführungsformen der Erfindung ausarbeiten, ohne erfinderisch tätig werden zu müssen Alle Angaben erfolgen in Gewichtsprozent. Sofern wasser- und/oder lösemittelhaltige Zubereitungen zum Einsatz kamen, bezieht sich die Angabe auf den Festkörperanteil dieser Zubereitung.

In den Ausfuhrungsbeispielen 1.2, 1.3 und 1.4, sowie 2.2 und 2.3, wurde, ausgehend von den Vergleichsbeispielen 1.1 und 2.1, exemplarisch organisches Bindemittel im Wesentlichen festkörpergleich schrittweise durch anorganisches Bindemittel ersetzt.

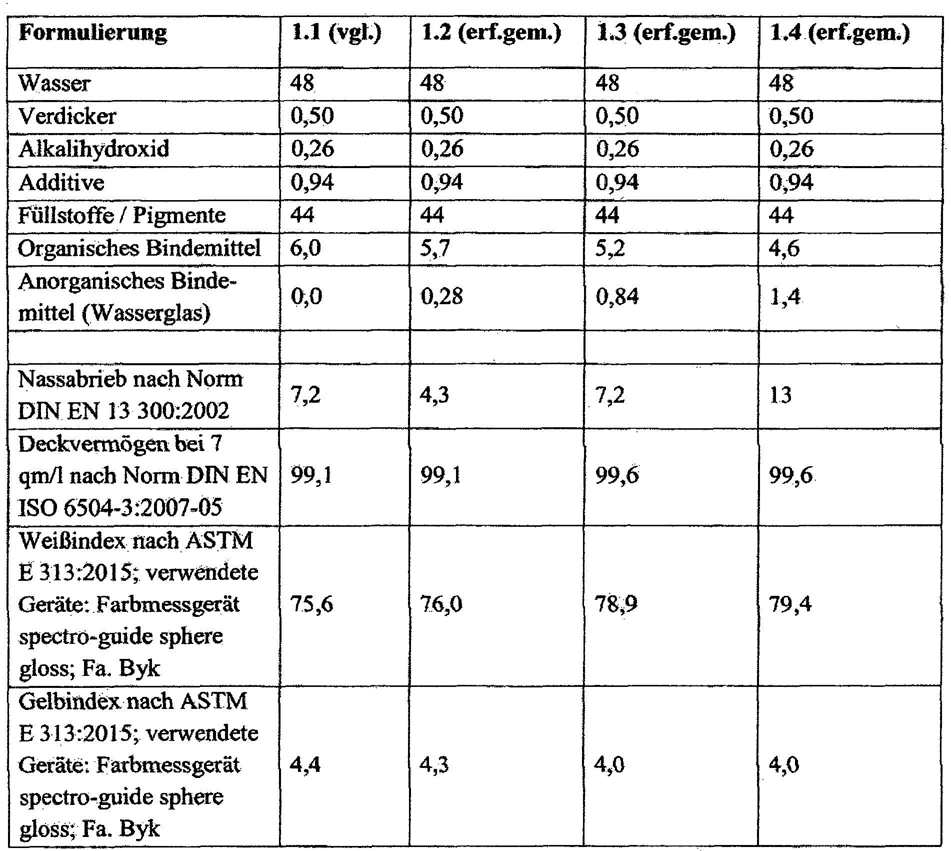

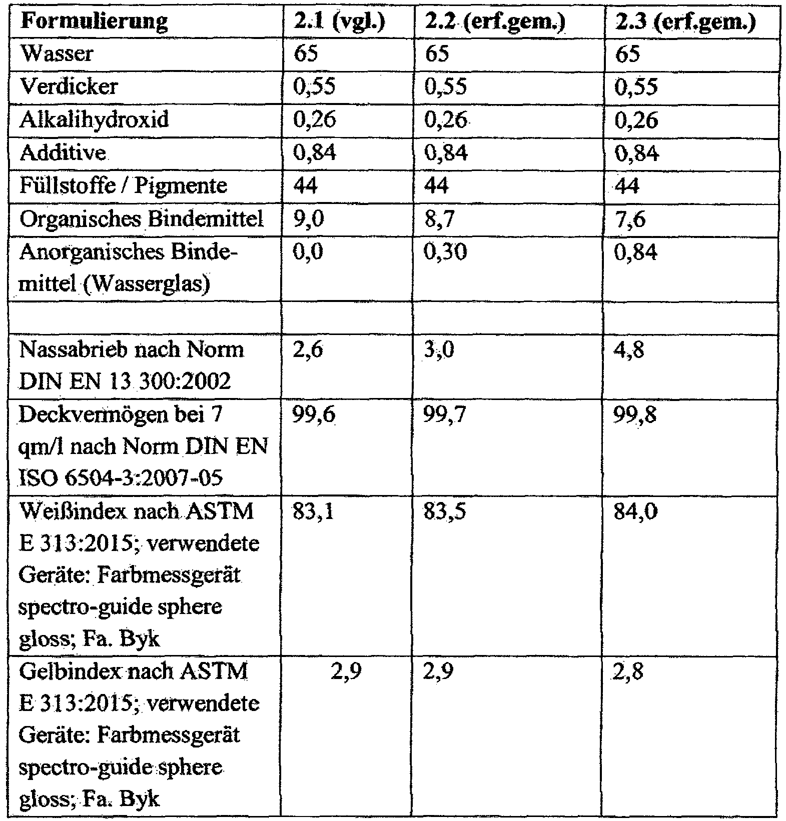

Die in der vorstehenden Beschreibung und in den Ansprüchen offenbarten Merkmale der Erfindung können sowohl einzeln aus auch in jeder beliebigen Kombination für die Verwirklichung der Erfindung in ihren verschiedenen Ausführungsformen wesentlich sein.

## Patentansprüche

1. Wässrige Beschichtungsstoffe, enthaltend
a) organische Bindemittel in einer Menge im Bereich von 4,0 bis 30 Gew.-% (Feststoffanteil),
b) Wasserglas und/oder Kieselsol in einer Menge im Bereich von 0,1 bis kleiner 1,5 Gew.-% (Feststoffanteil) und
c) 15 bis 70 Gew.-% an mindestens einem Pigment und/oder mindestens einem Füllstoff und
e) mindestens ein Rheologieadditiv, insbesondere Verdicker,
wobei das organische Bindemittel a) in den Beschichtungsstoffen in Form einer wässrigen Dispersion auf Basis von Vinylacetat/Ethylen-Copolymeren, Copolymeren auf Basis von Vinylaromaten und Acrylaten und/oder Copolymeren auf Basis von Reinacrylaten vorliegt und wobei das organische Bindemittel a) und Wasserglas und/oder Kieselsol in Form eines hybriden Bindemittels vorliegen und
wobei diese einen pH-Wert im Bereich von 8,5 bis 12 aufweisen oder auf einen pH-Wert im Bereich von 8,5 bis 12 eingestellt sind.

2. Beschichtungsstoffe nach Anspruch 1, enthaltend
das organische Bindemittel a) in einer Menge im Bereich von 4,0 bis 12,5 Gew.-%, bevorzugt im Bereich von 4,5 bis 10,0 Gew.-% und besonderes bevorzugt im Bereich von 5,0 bis 9,0 Gew.-%, und/oder das Wasserglas und/oder Kieselsol in einer Menge im Bereich von 0,1 bis 1,45 Gew.-% und bevorzugt im Bereich von 0,25 bis 1,40 Gew.-%.

3. Beschichtungsstoffe nach Anspruch 1 oder 2, **dadurch gekennzeichnet, dass** die Copolymeren auf Basis von Vinylaromaten und Acrylaten Styrolacrylatcopolymere darstellen.

4. Beschichtungsstoffe nach einem der vorangehenden Ansprüche, enthaltend das mindestens eine Pigment und/oder den mindestens einen Füllstoff c) in einer Menge im Bereich von 25 bis 70 Gew.-% und besonders bevorzugt im Bereich von 35 bis 6o Gew.-%.

5. Beschichtungsstoffe nach einem der vorangehenden Ansprüche, **dadurch gekennzeichnet, dass**
diese einen pH-Wert im Bereich von 9 bis 12, vorzugsweise im Bereich von 9 bis 11,5, aufweisen oder auf einen pH-Wert im Bereich von 9 bis 12, vorzugsweise im Bereich von 9 bis 11,5, eingestellt sind.

6. Beschichtungsstoffe nach einem der vorangehenden Ansprüche, ferner enthaltend
d) mindestens ein pH-Einstellmittel, insbesondere ausgewählt aus der Gruppe bestehend aus Alkalihydroxiden, Erdalkalihydroxiden, Ammoniak, Aminverbindungen und beliebigen Mischungen hiervon, insbesondere mindestens einen Aminoalkohol,
f) mindestens ein Alkylalkoxysilan, Alkylalkoxysiloxan, wasserlösliches Alkylsilikonat, insbesondere Kaliummethylsilikonat, Monoalkylsilantriol, Dialkylsilandiol, Trialkylsilanol, Alkalisalz von Monoalkylsilantriol, insbesondere Kaliummethylsilantriolat und/oder Kaliumethylsilantriolat, Dialkylsilandiol oder Trialkylsilanol oder beliebigen Mischungen hiervon und
g) gegebenenfalls mindestens einen Chelatbildner und/oder
h) gegebenenfalls mindestens ein Additiv.

7. Beschichtungsstoffe nach Anspruch 6, **dadurch gekennzeichnet, dass** das mindestens eine Additiv h) ausgewählt ist aus der Gruppe bestehend aus mindestens einem Netz- und/oder Dispergiermittel, Entschäumern, Stabilisatoren, Flammschutzmitteln, Hydrophobierungsmitteln, Mattierungsmitteln, insbesondere Fällungskieselsäure, Schichtsilikaten, organisch modifizierten Schichtsilikaten, Oberflächenadditiven, insbesondere Silikonoberflächenadditiven, beispielsweise polyethermodifiziertes Polymethylalkylsiloxan und/oder Silikonpolyether-Copolymere, Puffersubstanzen, UV-Absorbern, Radikalfängern und Mischungen dieser Verbindungen.

8. Beschichtungsstoffe nach Anspruch 6 oder 7, **dadurch gekennzeichnet, dass** der Verdicker ausgewählt ist aus der Gruppe bestehend aus Polyacrylat-Verdickern, Polyurethan-Verdickern, Polyharnstoff-Verdickern, Cellulose-Verdickern, insbesondere Hydroxyethylcellulose und/oder Methylcellulose, Polyvinylalkohol-Verdickern, Polyetherpolyol-Verdickern, Schichtsilikat-Verdicker, Polysaccharid-Verdickern, insbesondere Xanthan, und beliebigen Mischungen hiervon.

9. Beschichtungsstoffe nach einem der vorangehenden Ansprüche, **dadurch gekennzeichnet, dass**
diese im Wesentlichen frei von Konservierungsmitteln, vorzugsweise frei von organischen bioziden Konservierungsmitteln, besonders bevorzugt frei von Topf- und/oder Filmkonservierungsmitteln sind.

10. Beschichtungsstoffe nach einem der vorangehenden Ansprüche, **dadurch gekennzeichnet, dass**
die Pigmente ausgewählt sind aus der Gruppe bestehend aus Titandioxid, Zinksulfid, Zinkoxid, Baryt, Ruß, Eisenoxid, Chromoxid, Kobaltblau, Phtalocyaninpigmenten, Spinellpigmenten, Nickel- und Chromtitanat und beliebigen Mischungen hiervon.

11. Beschichtungsstoffe nach einem der vorangehenden Ansprüche, **dadurch gekennzeichnet, dass**
die Füllstoffe ausgewählt sind aus der Gruppe bestehend aus Silikaten, Karbonaten, Flußspat, Sulfaten und Oxiden.

12. Beschichtungsstoffe nach einem der vorangehenden Ansprüche, **dadurch gekennzeichnet, dass**
das Wasserglas ausgewählt ist aus der Gruppe bestehend aus Natrium-, Kalium-, Lithium wasserglas und beliebigen Mischungen hiervon.

13. Beschichtungsstoffe nach einem der vorangehenden Ansprüche, enthaltend
i) 4 bis12,5 Gew.-%, insbesondere 4 bis 7 Gew.-%, Polymerdispersion,
ii) 0 bis 30 Gew.-%, insbesondere 2,0 bis 15 Gew.-%, Pigmente,
iii) 15 bis 70 Gew.-%, insbesondere 20 bis 65 Gew.-%, Füllstoffe,
iv) 0,1 bis 1,5 Gew.-%, insbesondere 0,2 bis 1,25 Gew.-%, Wasserglas und
v) zu 100 Gew.-% ergänzte Anteile an Wasser enthält.

14. Beschichtungsstoffe nach einem der vorangehenden Ansprüche, **dadurch gekennzeichnet, dass**
das pH-Einstellmittel einen pKs-Wert größer oder gleich 9,9, insbesondere größer oder gleich 12,0 aufweist.

15. Beschichtungsstoffe nach einem der vorangehenden Ansprüche, **dadurch gekennzeichnet, dass**
diese eine Grundierung oder eine Fassaden- oder Innenraumfarbe darstellt.

16. Farb- oder Grundierungsanstrich auf einer Substratoberfläche, erhalten oder erhältlich durch ein- oder mehrmaliges Auftragen der Beschichtungsstoffe nach einem der vorangehenden Ansprüche auf der Substratoberfläche.

17. Verwendung der Beschichtungsstoffe, insbesondere der Dispersionsbeschichtungsstoffe, nach einem der Ansprüche 1 bis 15 als Farbe oder Grundierung für den Innenraumbereich.

## Claims

1. Aqueous coating substances, containing
a) organic binding agents in a quantity in the range of 4.0 to 30 wt.-% (solids content),
b) water glass and/or silica sol in a quantity in the range of 0.1 to less than 1.5 wt.-% (solids content) and
c) 15 to 70 wt.-% of at least one pigment and/or at least one filler and
e) at least one rheology additive, in particular thickener,
wherein the organic binding agent a) in the coating substances are present in the form of an aqueous dispersion based on vinyl acetate/ethylene copolymers, copolymers based on vinyl aromates and acrylates and/or copolymers based on pure acrylates and wherein the organic binding agent a) and water glass and/or silica sol are present in the form of a hybrid binding agent and
wherein these have a pH value in the range of 8.5 to 12 or are adjusted to a pH value in the range of 8.5 to 12.

2. The coating substances according to Claim 1, containing
the organic binding agent a) in a quantity in the range of 4.0 to 12.5 wt.-%, preferably in the range of 4.5 to 10.0 wt.-% and particularly preferably in the range of 5.0 to 9.0 wt.-%, and/or the water glass and/or silica sol in a quantity in the range of 0.1 to 1.45 wt.-% and preferably in the range of 0.25 to 1.40 wt.-%.

3. The coating substances according to Claim 1 or 2, **characterized in that**
the copolymers constitute styrene acrylate copolymers based on vinyl aromates and acrylates.

4. The coating substances according to any one of the preceding claims, containing the at least one pigment and/or the at least one filler c) in a quantity in the range of 25 to 70 wt.-% and particularly preferably in the range of 35 to 60 wt.-%.

5. The coating substances according to any one of the preceding claims, **characterized in that**
they have a PH value in the range of 9 to 12, preferably in the range of 9 to 11.5, or are adjusted to a pH value in the range of 9 to 12, preferably in the range of 9 to 11.5.

6. The coating substances according to any one of the preceding claims, further containing
d) at least one pH adjusting agent, in particular selected from the group consisting of alkali hydroxides, alkaline earth hydroxides, ammonia, amine compounds and any mixtures hereof, in particular at least one amino alcohol,
f) at least one alkylalkoxysilane, alkylalkoxysiloxane, water-soluble alkyl siliconate, in particular potassium methyl siliconate, monoalkylsilanetriol, dialkylsilanediol, trialkyl silanol, alkali salt of monoalkylsilanetriol, in particular potassium methylsilanetriolate and/or potassium methylsilanetriolate, dialkylsilanediol or trialkyl silanol or any mixtures hereof and
g) optionally at least one chelating agent and/or
h) optionally at least one additive.

7. The coating substances according to Claim 6, **characterized in that** the at least one additive h) is selected from the group consisting of at least one wetting and/or dispersing agent, defoamers, stabilisers, flame retardants, hydrophobising agents, matting agents, in particular precipitated silicas, sheet silicates, organically modified sheet silicates, surface additives, in particular silicone surface additives, for example polyether modified polymethylalkylsiloxane and/or silicone polyether copolymers, buffer substances, UV absorbers, free-radical scavengers and mixtures of these compounds.

8. The coating substances according to Claim 6 or 7, **characterized in that** the thickener is selected from the group consisting of polyacrylate thickeners, polyurethane thickeners, polyurea thickeners, cellulose thickeners, in particular hydroxyethyl cellulose and/or methyl cellulose, polyvinyl alcohol thickeners, polyether polyol thickeners, sheet silicate thickener, polysaccharide thickeners, in particular xanthan, and any mixtures hereof.

9. The coating substances according to any one of the preceding claims, **characterized in that**
they are substantially free of preservatives, preferably free of organic biocidal preservatives, particularly preferably free of in-can and/or film preservatives.

10. The coating substances according to any one of the preceding claims, **characterized in that**
the pigments are selected from the group consisting of titanium dioxide, zinc sulphide, zinc oxide, barite, carbon black, iron oxide, chromium oxide, cobalt blue, phthalocyanine pigments, spinel pigments, nickel and chromium titanate and any mixtures hereof.

11. The coating substances according to any one of the preceding claims, **characterized in that**
the fillers are selected from the group consisting of silicates, carbonates, fluorspar, sulphates and oxides.

12. The coating substances according to any one of the preceding claims, **characterized in that**
the water glass is selected from the group consisting of sodium water glass, potassium water glass, lithium water glass and any mixtures hereof.

13. The coating substances according to any one of the preceding claims, containing
i) 4 to 12.5 wt,-%, in particular 4 to 7 wt-%, polymer dispersion,
ii) 0 to 30 wt.-%, in particular 2.0 to 15 wt.-%, pigments,
iii) 15 to 70 wt.-%, in particular 20 to 65 wt.-%, fillers
iv) 0.1 to 1.5 wt.-%, in particular 0.2 to 1.25 wt.-%, water glass and
v) water added to 100 wt.-%.

14. The coating substances according to any one of the preceding claims, **characterized in that**
the pH adjusting agent has a pKa value of greater than or equal to 9.9, in particular greater than or equal to 12.0.

15. The coating substances according to any one of the preceding claims, **characterized in that**
they constitute a primer or an exterior or interior paint.

16. A paint or primer coat on a substrate surface, obtained or obtainable by single or multiple application of the coating substances according to any one of the preceding claims on the substrate surface.

17. The use of the coating substances, in particular the dispersion coating substances, according to any one of Claims 1 to 15 as a paint or primer for an interior area.

## Revendications

1. Matériaux de revêtement aqueux, contenant
a) des liants organiques en quantité comprise dans la plage de 4,0 à 30 % en poids (teneur en matière solide),
b) du verre soluble (silicate) et/ou une solution de silice en quantité comprise dans la plage de 0,1 à moins de 1,5 % en poids (teneur en matière solide) et
c) 15 à 70 % en poids d'au moins un pigment et/ou d'au moins une matière de charge et
e) au moins un additif rhéologique, en particulier un agent épaississant,
dans lequel le liant organique est présent a) dans les matériaux de revêtement sous la forme d'une dispersion aqueuse à base de copolymères d'éthylène et d'acétate de vinyle, de copolymères à base d'aromates vinyles et d'acrylates et/ou de copolymères à base d'acrylates purs et dans lequel le liant organique a) et le silicate et/ou la solution de silice sont présents sous la forme d'un liant hybride et
dans lequel ils présentent une valeur pH dans la plage de 8,5 à 12 ou sont ajustés sur une valeur pH dans la plage de 8,5 à 12.

2. Matériaux de revêtement selon la revendication 1, contenant
le liant organique a) en quantité comprise dans la plage de 4,0 à 12,5 % en poids, de préférence dans la plage de 4,5 à 10,0 % en poids et particulièrement préférablement dans la plage de 5,0 à 9,0 % en poids, et/ou le silicate et/ou la solution de silice en quantité comprise dans la plage de 0,1 à 1,45 % en poids et de préférence dans la plage de 0,25 à 1,40 % en poids.

3. Matériaux de revêtement selon la revendication 1 ou 2, **caractérisés en ce que**
les copolymères à base d'aromates vinyles et d'acrylates représentent des copolymères d'acrylate styrène.

4. Matériaux de revêtement selon l'une des revendications précédentes, contenant
l'au moins un pigment et/ou l'au moins une matière de charge c) en quantité comprise dans la plage de 25 à 70 % en poids et particulièrement préférablement dans la plage de 35 à 60 % en poids.

5. Matériaux de revêtement selon l'une des revendications précédentes, **caractérisés en ce qu'**
ils présentent une valeur pH dans la plage de 9 à 12, de préférence dans la plage de 9 à 11,5, ou sont ajustés sur une valeur pH dans la plage de 9 à 12, préférablement dans la plage de 9 à 11,5.

6. Matériaux de revêtement selon l'une des revendications précédentes, contenant en outre d) au moins un moyen d'ajustement du pH, en particulier choisi dans le groupe constitué d'hydroxydes alcalins, d'hydroxydes alcalino-terreux, d'ammoniaque, de composés d'amine et des mélanges appropriés de ceux-ci, en particulier au moins un amino-alcool,
f) au moins un silane alkyl-alkoxylé, un siloxane alkyl-alkoxylé, un alkyl-siliconate hydrosoluble, en particulier un siliconate de méthyle de potassium, un monoalkylsilanetriol, un dialkylsilanediol, un trialkyl-silanol, un sel alcali de monoalkylsilanetriol, en particulier un silanetriolate de méthyle de potassium et/ou un silanetriolate de méthyle de potassium, un dialkylsilanediol ou un trialkylsilanol ou des mélanges appropriés de ceux-ci ; et
g) éventuellement au moins un agent chélateur et/ou
h) éventuellement au moins un additif.

7. Matériaux de revêtement selon la revendication 6, **caractérisés en ce que** l'au moins un additif h) est choisi dans le groupe constitué au moins d'agents mouillants et/ou de dispersion, d'agents antimousse, d'agents stabilisants, de moyens ignifuges, de moyens hydrophobes, d'agents de matité, en particulier d'une silice précipitée, de silicates en feuillets, de silicates en feuillets organiques modifiés, d'additifs de surface, en particulier d'additifs de surface siliconés, par exemple un polyméthylalkylsiloxane modifié au polyéther et/ou un copolymère de polyéther silicone, des substances tampons, des absorbeurs UV, des capteurs de radicaux et des mélanges de ces composés.

8. Matériaux de revêtement selon la revendication 6 ou 7, **caractérisé en ce que** l'agent épaississant est choisi dans le groupe constitué d'agents épaississants de polyacrylate, d'agents épaississants de polyuréthane, d'agents épaississants de polyrésine, d'agents épaississants de cellulose, en particulier l'hydroxyéthylcellulose et/ou la méthylcellulose, d'agents épaississants d'alcool polyvinylique, d'agents épaississants de polyéther polyol, d'agents épaississants de phyllosilicate, d'agents épaississants de polysaccharide, en particulier le xanthane, et des mélanges appropriés de ceux-ci.

9. Matériaux de revêtement selon l'une des revendications précédentes, **caractérisés en ce qu'**
ils sont sensiblement exempts de moyens de conservation, de préférence exempts de moyens de conservation biocides organiques, particulièrement préférablement exempts de moyens de conservation en pot et/ou film.

10. Matériaux de revêtement selon l'une des revendications précédentes, **caractérisés en ce que**
les pigments sont choisis dans le groupe constitué de dioxyde de titane, de sulfure de zinc, d'oxyde de zinc, de baryte, de suie, d'oxyde de fer, d'oxyde de chrome, de bleu de cobalt, de pigments de phtalocyanine, de pigments spinelle, de titanate de nickel et chrome et des mélanges appropriés de ceux-ci.

11. Matériaux de revêtement selon l'une des revendications précédentes, **caractérisés en ce que**
les matières de charge sont choisies dans le groupe constitué de de silicates, de carbonates, de fluorine, de sulfates et d'oxydes.

12. Matériaux de revêtement selon l'une des revendications précédentes, **caractérisé en ce que**
le silicate est choisi dans le groupe constitué de silicate de sodium, de potassium, de lithium et des mélanges appropriés de ceux-ci.

13. Matériaux de revêtement selon l'une des revendications précédentes, contenant
i) 4 à 12,5 % en poids, en particulier 4 à 7 % en poids, de dispersion de polymère,
ii) 0 à 30 % en poids, en particulier 2,0 à 15 % en poids, de pigments,
iii) 15 à 70 % en poids, en particulier 20 à 65 % en poids, de matières de charge,
iv) 0,1 à 1,5 % en poids, en particulier 0,2 à 1,25 % en poids, de silicate et
v) contient des teneurs en eau ajoutées jusqu'à l'obtention de 100 % en poids.

14. Matériaux de revêtement selon l'une des revendications précédentes, **caractérisés en ce que**
le moyen d'ajustement du pH présente une valeur des pKs supérieure ou égale à 9,9, en particulier supérieure ou égale à 12,0.

15. Matériaux de revêtement selon l'une des revendications précédentes, **caractérisés en ce qu'**
ils représentent une couche primaire ou une peinture couleur de façade ou de pièces intérieures.

16. Couche de peinture couleur ou de primaire sur la surface d'un substrat, obtenue ou pouvant être obtenue à partir d'une ou de plusieurs applications de matériaux de revêtement selon l'une des revendications précédentes sur la surface du substrat.

17. Utilisation des matériaux de revêtement, en particulier des matériaux de revêtement par dispersion, selon l'une des revendications 1 à 15 en tant que peinture couleur ou couche primaire pour des zones en intérieur.
